Europäisches Patentamt

European Patent Office

Office européen des brevets

(11) Publication number: **0 336 492**
**A1**

(12) **EUROPEAN PATENT APPLICATION**

(21) Application number: **89200801.2**

(22) Date of filing: **29.03.89**

(51) Int. Cl.⁴: **F16L 1/04 , E21B 43/013 , E21B 43/017**

(30) Priority: **08.04.88 NL 8800913**

(43) Date of publication of application:
**11.10.89 Bulletin 89/41**

(84) Designated Contracting States:
**AT BE CH DE ES FR GB GR IT LI LU NL SE**

(71) Applicant: **SMIT OFFSHORE CONTRACTORS B.V.**
**Zalmstraat 1**
**NL-3016 DS Rotterdam(NL)**

(72) Inventor: **Vergouw, Theodorus Christianus Maria**
**Tol 2**
**NL-2871 CG Schoonhoven(NL)**

(74) Representative: **de Bruijn, Leendert C. et al**
**Nederlandsch Octrooibureau**
**Scheveningseweg 82 P.O. Box 29720**
**NL-2502 LS 's-Gravenhage(NL)**

(54) **Drill- and/or production system for oil and/or gas.**

(57) Drill- and/or production system for oil and/or gas, whereby a pipeline bundle (2) is transported from a constrtuction site onshore to an offshore oilfield, where as a minimum at that end of the bundle, which is intended to be connected to the drill- and/or production system, a towhead (1) is present, where a subsea manifold system is present for produced oil and/or gas and injected water, to which the relative end of the pipeline bundle (2) can be connected, and where as a minimum the manifold system is integrated and the towhead (1) and therefore can be transported simultaneously with the pipeline bundle (2), preferably also the subsea drilling template and/or the oil/gas transport systems are integrated with the towhead.

fig-1

## Drill- and/or production system for oil and/or gas.

The invention relates to a drill- and/or production system for oil and/or gas, whereby a pipeline bundle is transported from a construction site onshore to an offshore oilfield, where, as a minimum at that end of the pipeline bundle which is intended to be connected to the drill- and/or production system, a towhead is present and where a subsea manifold system is present for produced oil and/or gas and injected water, to which the relative end of the pipeline bundle can be connected.

From British patent 2.153.318 of the Applicant, a system is known for suspended transport under water of a very long pipeline bundle, enclosed by a carrier pipe, from an onshore construction site to an offshore location, where oil and/or gas is produced.

The bundle is towed, suspended between a tug at both ends of the bundle. For that purpose, both ends are provided with a towhead. These towheads have been provided with buoyancy means, that compensate for the weight of the towhead. At its offshore destination, one end of the pipeline bundle is connected through the towhead to the production platform or the like, for instance as shown in US-patent 4.363.566. The other end of the bundle is connected through the towhead to the subsea manifold system for produced oil and/or gas and injected water, generally referred to as a subsea production system. Such a production system comprises, additional to the drilling template, a comprehensive system of pipes, valves and controls (piping manifold) and serves to connect the subsea production system and possibly a number of satellite wells to the relative end of the bundle and thus to the production platform.

At the present state of the art such a production system is built onshore as a separate unit.
When exploration drilling is sucessful, this production system must be transported separately to the drilling location to be placed there. Therefore, all connections with the subsea production system and the possible satellite wells must be carried out offshore and below sea-level.

Now, when the bundle has arrived at the destined offshore location, for instance towed in a way as described in British patent 2.153.318, all pipes and conduits of the bundle must be connected offshore and in general below sealevel with the previously installed subsea production system.

The invention aims at avoiding as much as possible this extensive offshore subsea work and this is accomplished according to the invention, in that the system of pipes, valves and controls (piping manifold) is integrated with the towhead and thus can be transported simultaneously with the pipeline bundle.

The advantages of the integration of towhead and piping manifold are as follows:
-Less materials are required and fabrication cost is lower than for separate towhead and piping manifold.
-Cost for transport is lower, the piping manifold basically has "free transport" with the bundle.
-The only connections left to be made offshore are the ones to the satellite wells.
-Less offshore work is required for testing and commissioning of the bundle and piping manifold as most of this work can be performed onshore.
-Offshore, the towhead forms a permanent protection for the piping manifold and the valves and controls.
-Everything can be fabricated, assembled and tested onshore before tow-out takes place.
-All manifolding for pipes, valves and controls are for instance located in the front towhead and can be accurately checked and tested through the control lines at the rear towhead.
-When the pipeline bundle has arrived at its offshore location, the annular space of the carrier pipe is filled, generally with water, so that the bundle sinks and the connections with the existing wells can be made after which production can start.
Consequently, more wells can be drilled and connected.

According to a further development of the invention, also the subsea drilling template is integrated in the towhead.
In this way, everything can be fabricated onshore and all connections and testing can be carried out onshore, so that all offshore connections are avoided.

According to a further development, also the oil and/or gas transport systems are integrated in the towhead.

This last development is applied when well pressure is insufficient to drive the fluids to the production platform.

The transport systems mentioned above may comprise known pumps and separators for separating oil and gas for instance to avoid "water-hammer" in the flowlines.

Under certain conditions it may be required to incorporate at least one piping manifold in the pipeline bundle itself, so not in the towhead, but at a certain distance from the towhead. In this way, also wells along the bundle corridor can be connected to the bundle. These wells may be production wells or water injection wells.
The invention will be illustrated by three schematic drawings, in which:

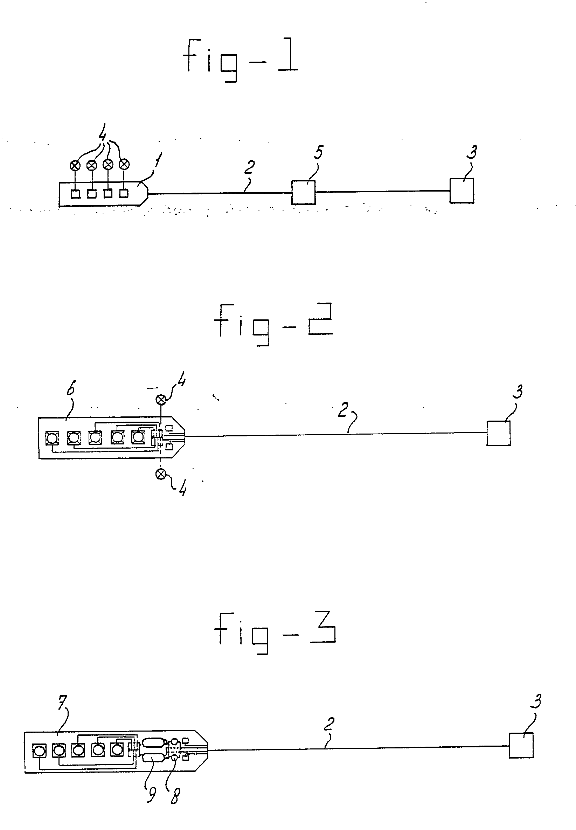

Fig. 1, 2 and 3 respectively show the scheme of the first, second and third development scenario.

According to fig.1 the piping manifold is integrated in the towhead. This combination is indicated by 1. The pipeline bundle is indicated by 2 and the production platform by 3.

The subsea wells are indicated by 4. A possible extra manifold is indicated by 5.

In fig.2 the combination of towhead, piping manifold and subsea drilling template is indicated by 6.

In fig.3, combination 6 according to fig.2 plus the transport systems for oil and/or gas is indicated by 7.

These systems may comprise known pumps 8 and separators 9 for fluid and gas, so called slug catchers.

## Claims

1. Drill- and/or production system for oil and/or gas, whereby a pipeline bundle is transported from a construction site onshore to an offshore oilfield, where as a minimum at that end of the bundle, which is intended to be connected to the drill- and/or production system, a towhead is present and where a subsea manifold system is present for produced oil and/or gas and injected water, to which the relative end of the pipeline bundle can be connected, characterized in that the manifold system is integrated with the towhead and therefore can be transported simultaneously with the pipeline bundle.

2. System according to conclusion 1, characterized by the additional integration of the subsea drilling template in the towhead.

3. System according to conclusion 2, characterized by the additional integration of the oil/gas transport systems in the towhead.

4. System according to one or more of the previous conclusions characterized by the integration of at least one piping manifold in the pipeline bundle at a certain distance from the towhead(s).

Fig - 1

Fig - 2

Fig - 3

European Patent
Office

EUROPEAN SEARCH REPORT

Application Number

EP 89 20 0801

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 198 080 (LOCKHEED PETROLEUM SERVICES LTD)<br>* Page 5, line 30 - page 6, line 24; figures *<br>--- | 1 | F 16 L 1/04<br>E 21 B 43/013<br>E 21 B 43/017 |
| A | GB-A-2 191 229 (BELL et al.)<br>* Whole document *<br>----- | 1 | |

TECHNICAL FIELDS
SEARCHED (Int. Cl.4)

F 16 L
B 21 B

The present search report has been drawn up for all claims

| Place of search | Date of completion of the search | Examiner |
|---|---|---|
| THE HAGUE | 02-06-1989 | HUBEAU M.G. |